# EUROPEAN PATENT SPECIFICATION

(11) **EP 4 280 388 B1**
(45) Date of publication and mention of the grant of the patent: **11.11.2026**
(21) Application number: 22874148.4
(22) Date of filing: 29.03.2022
(51) Int. Cl.: H01R 11/09

(54) **BUNDLED SUBMARINE CABLE JUNCTION BOX**
GEBÜNDELTE UNTERWASSERKABELVERBINDUNGSBOX
BOÎTE DE JONCTION DE CÂBLE SOUS-MARIN EN FAISCEAU

(30) Priority: 29.09.2021 CN 202111148596
(43) Date of publication of application: 22.11.2023
(73) Proprietor: Zhongtian Technology Submarine Cable Co., Ltd., Nantong, Jiangsu 226000 (CN)
(72) Inventor: PAN, Pan, Nantong, Jiangsu 226000 (CN); WANG, Haitao, Nantong, Jiangsu 226000 (CN); HU, Ming, Nantong, Jiangsu 226000 (CN); ZHANG, Hongliang, Nantong, Jiangsu 226000 (CN); NI, Shenhui, Nantong, Jiangsu 226000 (CN)
(74) Representative: J A Kemp LLP
(86) International application number: PCT/CN2022/083842
(87) International publication number: WO 2023/050747

(56) References cited:
- EP-A1- 1 012 642
- CN-A- 106 877 089
- CN-A- 110 212 485
- CN-A- 110 212 485
- CN-A- 113 904 136
- CN-U- 210 605 142
- CN-U- 210 605 142
- CN-Y- 201 247 858
- US-A1- 2007 155 248
- US-A1- 2010 038 899
- US-B2- 7 481 584

## Description

### TECHNICAL FIELD

This application relates to a technical field of a submarine cable, in particular to a joint box for bundled submarine cables.

### BACKGROUND

With an in-depth development of Bohai oilfield, the proportion of marginal oilfield development projects is gradually increasing. In order to increase the production capacity and adapt to yearly production allocation, marginal oilfields with low production capacity and poor efficiency require the use of inverters to remotely control subsea wellhead electric submersible pumps. Due to the large dispersion and long distance at which marginal oilfields are located, new platforms are required to control electric power transmission of multiple surrounding wellheads. Traditional three-core submarine cables, that connects supporting platform and newly built platform, can no longer meet requirements of variable frequency drive between the multiple wellheads. Operation of bundled submarine cables with multiple three-core electric circuit units is an effective way to realize the application of unattended platforms, centralize the development of multiple oil wells, reduce construction costs, and reduce environmental pollution. When the bundled submarine cables with multiple three-core electric circuit units are damaged, it is necessary to fabricate a joint box to repair them.

In the related art, the joint box includes a shell, a sealing end cover, an electric connector and an optical connector. The shell is circular, two ends of the shell are provided with the sealing end covers respectively, and the electric connector and the optical connector are disposed outside the shell. When connecting two bundled submarine cables with multiple three-core electric circuit units that need to be connected, the cores of the two bundled submarine cables are respectively threaded through the sealing end covers at both ends of the joint box and enter the interior of the housing for connection through the electric connectors and the optical connectors.

US 2010038899 A1 discloses an umbilical field connect assembly, comprising: a first umbilical portion comprising two or more first bundled members chosen from electrical cables, fluid conduits, and optical fibers; a second umbilical portion comprising two or more second bundled members chosen from electrical cables, fluid conduits, and optical fibers; a first housing assembly having a first end coupled to the first umbilical portion and a second end comprising a first coupling plate having a plurality of first couplings chosen from male and female couplings positioned therein, one of the plurality of first couplings being positioned at an end of each of the first bundled members; a second housing assembly having a third end coupled to the second umbilical portion and a fourth end comprising a second coupling plate having a plurality of second couplings chosen from male and female couplings positioned therein, one of the second couplings being positioned at an end of each of the second bundled members.

CN110212485A discloses a three-core high-voltage submarine cable joint box comprising an outer assembly, at least three electrical connection assemblies and at least one optical connection assembly, where the electric connection assemblies and the optical connection assemblies are arranged inside the outer assembly; and two submarine cables that need to be connected are inserted into the outer assembly from two opposite ends of the outer assembly respectively, and are connected through the electric connection assemblies and the optical connection assemblies to form the submarine cable joint box.

US7481584B2 discloses a dry-mate connector, having nipples on the front or mating side of the electrical conductors on both the plug and receptacle units which cooperate with an elastomeric seal on the mating end of one of the units to provide an individual seal around each electrical circuit in the mated condition. In a hybrid version of the connector, an optical contact assembly is provided in each unit which has a multi-fiber ferrule at the mating end of the assembly, allowing a high contact density to be achieved in a relatively small space.

However, when there are many electric circuit units and optical units in a bundled submarine cable with multiple three-core electric circuit units, a problem that the cores of the two bundled submarine cables are connected messily in the joint box will occur.

### SUMMARY

The present invention is defined in the appended set of claims. This application provides a joint box for bundled submarine cables to solve the problem that when there are many electric circuit units and optical units in a bundled submarine cable with multiple three-core electric circuit units, a problem that the cores of the two bundled submarine cables are connected messily in the joint box will occur.

This application provides a joint box for bundled submarine cables, including a first anchoring element, a second anchoring element, a protective cover, at least three electric connectors, at least one optical connector and a sealed cabin.

The first anchoring element and the second anchoring element are respectively fixed at both ends of the protective cover, a first sealed cavity is enclosed by the first anchoring element, the second anchoring element and the protective cover, the sealed cabin is fixed in the first sealed cavity and includes a male housing and a female housing, and the male housing and the female housing enclose a second sealed cavity in a detachable manner.

The electric connector includes a male electric connector and a female electric connector, the optical connector includes a male optical connector and a female optical connector, at least three male electric connectors and at least one male optical connector are fixed on the male housing, at least three female electric connectors and at least one female optical connector are fixed on the female housing, at least three male electric connectors and at least three female electric connectors are connected to each other in the second sealed cavity in a one-to-one correspondence such that electric circuit units of two bundled submarine cables extending into the first sealed cavity are connected to each other in a one-to-one correspondence, and at least one male optical connector and at least one female optical connector are connected to each other in the second sealed cavity in a one-to-one correspondence such that optical units of two bundled submarine cables extending into the first sealed cavity are connected to each other in a one-to-one correspondence.

Optionally, the male housing includes a male fixing plate and a first connecting pipe, and the male fixing plate is vertically and fixedly connected with the first connecting pipe; the male fixing plate is provided with at least three male electrical plug-in channels and at least one male optical plug-in channel; positions of the at least three male electrical plug-in channels correspond to those of the electric circuit units of the bundled submarine cable, and a position of the at least one male optical plug-in channel corresponds to that of the optical unit of the bundled submarine cable; the male electric connector and the male electrical plug-in channel are connected to each other in a threaded manner, and the male optical connector and the male optical plug-in channel are to each other in a threaded manner.

The female housing includes a female fixing plate and a second connecting pipe, the female fixing plate is vertically fixedly connected with the second connecting pipe; the female fixing plate is provided with at least three female electrical plug-in channels and at least one female optical plug-in channel; positions of the at least three female electrical plug-in channels correspond to those of the electric circuit units of the bundled submarine cable, and a position of the at least one female optical plug-in channel corresponds to that of the optical unit of the bundled submarine cable; the female electric connector and the female electrical plug-in channel are connected to each other in a threaded manner, and the female optical connector and the female optical plug-in channel are connected to each other in a threaded manner.

Optionally, the male fixing plate and the first connecting pipe enclose a cavity with an open end, and the female fixing plate and the second connecting pipe enclose a cavity with an open end; the second connecting pipe is plugged into the first connecting pipe and abuts against the male fixing plate, and the first connecting pipe abuts against the female fixing plate, and the male fixing plate, the first connecting pipe, the female fixing plate and the second connecting pipe enclose the second sealed cavity.

Optionally, an outer wall of the second connecting pipe is provided with a sealing groove and a sealing ring, the sealing ring is installed in the sealing groove, the sealing groove is arranged along a circumferential direction of the second connecting pipe, and a plurality of the sealing grooves are arranged at equal intervals in an axial direction of the second connecting pipe.

Optionally, a fastening glue is provided between the male electric connector and the male electrical plug-in channel, and the fastening glue is provided between the male optical connector and male optical plug-in channel; the fastening glue is provided between the female electric connector and the female electrical plug-in channel, and the fastening glue is provided between the female optical connector and female optical plug-in channel.

Optionally, the male housing is provided with a six-core male electrical plug-in channel, six three-core male electrical plug-in channels and three male optical plug-in channels; the six-core male electrical plug-in channel is located at a center of the male fixing plate, the six three-core male electrical plug-in channels are located outside the six-core male electrical plug-in channel, the six three-core male electrical plug-in channels are arranged at equal intervals along a circumferential direction of the six-core male electrical plug-in channel as a center, and the three male optical plug-in channels are arranged between the six-core male electrical plug-in channel and the three-core male electrical plug-in channels, and the three male optical plug-in channels are arranged at equal intervals along the circumferential direction of the six-core male electrical plug-in channel as a center.

The joint box for bundled submarine cable further includes an adjustment screw, the adjustment screw is located in the first sealed cavity and connected to the first anchoring element, the second anchoring element, the male housing and the female housing, and the adjustment screw is configured for docking and separation of the male housing and the female housing.

The male housing is provided with four first screw holes which are disposed at equal intervals along a circumferential direction of the male housing; the female housing is provided with four second screw holes which are arranged at equal intervals along a circumferential direction of the female housing.

One adjustment screw is configured for each first screw hole of the male housing and corresponding second screw hole of the female housing, and the adjustment screw is provided with left-handed screw-threads and right-handed screw-threads; the first screw hole is matched with the left-handed screw-threads of the adjustment screw, and the second screw hole is matched with the right-handed screw-threads of the adjustment screw.

Optionally, the first anchoring element includes a first anchoring body and a first fixing baffle; one end of the first anchoring body is provided a sheath hole, and the other end of the first anchoring body is provided with a cavity, the cavity of the first anchoring body runs through the other end of the first anchoring body and is communicated with the sheath hole; the first fixing baffle is fixed with the other end of the first anchoring body and is provided with a cable-core hole, through which the cable core of the bundled submarine cable passes; the second anchoring element includes a second anchoring body and a second fixing baffle, one end of the second anchoring body is provided with a sheath hole, and the other end of the second anchoring body is provided with a cavity; the cavity of the second anchoring body runs through the other end of the second anchoring body and is communicated with the sheath hole, the second fixing baffle is fixed with the other end of the second anchoring body, and the second fixing baffle is provided with a cable-core hole, through which the cable core of the bundled submarine cable passes.

The protective cover is a Harvard-type protective cover, and includes a first cover body and a second cover body; the first cover body and the second cover body are docked to enclose a cylindrical cavity; and a fixing plate is provided outside the first anchoring body, a second fixing plate is provided outside the second anchoring body, and the first fixing plate and the second fixing plate are fixed at both ends of the cylindrical cavity respectively.

Optionally, the joint box for bundled submarine cables further includes a bending limiter, the first anchoring element and the second anchoring element are each connected to one bending limiter at an end away from the protective cover.

The bending limiter includes a plurality of hollow cylinders, one end of each hollow cylinder is provided with an annular groove, the other end of the hollow cylinder is provided with an annular protrusion, and one hollow cylinder of two adjacent hollow cylinders has the annular groove that is snap-connected with the annular protrusion of the other one of two adjacent hollow cylinders.

This application provides a joint box for bundled submarine cables. Connection of two bundled submarine cables is achieved using an electric connector and an optical connector. Both of the electric connector and optical connector include male parts and female parts. The male parts of the electric connector and optical connector are fixed on a male housing of the sealed cabin, and the female parts of the electric connector and the optical connector are fixed on a female housing of the sealed cabin, , thereby achieving docking of the sealed cabin in one piece and connection of respective connectors in a one-to-one correspondence, avoiding a problem that cable cores of two bundled submarine cables are connected in a disorderly manner in the joint box for bundled submarine cables. Further, the connection of the cable cores inside the joint box for the bundled submarine cables can be effectively completed to ensure safety of construction and operation.

### BRIEF DESCRIPTION OF DRAWINGS

In order to more clearly illustrate the technical solutions in the embodiments of this application or the prior art, drawings required in describing the embodiments or the prior art will be introduced briefly in the following. Obviously, the drawings in the following description refer to some embodiments of this application. Those skilled in the art can also obtain other drawings based on these drawings without any creative effort.
FIG. 1 is a cross-sectional structural schematic diagram of a bundled submarine cable provided by an embodiment of this application.
FIG. 2 is a structural schematic diagram of a joint box for bundled submarine cables provided by an embodiment of this application.
FIG. 3 is a cross-sectional structural schematic diagram of the joint box for bundled submarine cables provided in FIG. 2.
FIG. 4 is a partial structural schematic diagram of the joint box for bundled submarine cables provided in FIG. 2.
FIG. 5 is a partial structural schematic diagram of the joint box for bundled submarine cables provided in FIG. 4.
FIG. 6 is a structural schematic diagram of a male housing of a sealed cabin provided in FIG. 4.
FIG. 7 is a structural schematic diagram of another state of the male housing provided in FIG. 6.
FIG. 8 is a structural schematic diagram of a female housing of the sealed cabin provided in FIG. 4.
FIG. 9 is a structural schematic diagram of the female housing and a sealing ring provided in FIG. 8.
FIG. 10 is a structural schematic diagram of a first anchoring body of a first anchoring element provided in FIG. 2.
FIG. 11 is a structural schematic diagram of a first housing body of a protective housing provided in FIG. 2.

### Description of reference numerals:

10-first anchoring element; 11-first anchoring body; 111-sheath hole; 112-cavity; 113-first fixing plate; 12-first fixing baffle; 20-second anchoring element; 30-protective cover; 301-first sealed cavity; 31-first cover body; 311-sealing wall; 312-fixing wall; 32-second cover body; 40-electric connector; 41-male electric connector; 42-female electric connector; 50-optical connector; 51-male optical connector; 52-female optical connector; 60-sealed cabin; 601-second sealed cavity; 61-male housing; 611-male fixing plate; 6111-male electrical plug-in channel; 6112-male optical plug-in channel; 6113-first screw hole; 612-first connecting pipe; 62-female housing; 621-female fixing plate; 6211-female electrical plug-in channel; 6212-female optical plug-in channel; 6213-second screw hole; 622-second connecting pipe; 6221-sealing groove; 6222-sealing ring; 70-adjustment screw; 80-bending limiter; 100-bundled submarine cable; 110-sheath; 120-armoured steel wire; 130-cable core; 131-electric circuit unit; 132-optical unit.

### DESCRIPTION OF EMBODIMENTS

In order to make the purpose, technical solutions and advantages of the embodiments of this application clearer, the technical solutions in the embodiments of this application will be clearly and completely described below by combination with the drawings in the embodiments of this application. Obviously, the embodiments described are part, not all of the embodiments of this application. Based on the embodiments in this application, all other embodiments obtained by persons skilled in the art without creative efforts fall within the protection scope of this application.

It should be noted that the terms "first" and "second" are only used for descriptive purpose, and cannot be understood as indicating or implying relative importance or implicitly specifying the quantity of indicated technical features. Thus, the features defined as "first" and "second" may explicitly or implicitly include at least one of these features. In the description of this application, "a plurality of" means at least two, such as two, three, etc., unless otherwise specifically defined.

In this application, unless otherwise clearly specified and defined, the terms "install", "connect", "fix" and other terms should be understood in a broad sense. For example, it can be a fixed connection, a detachable connection, or integrated; it can be mechanically connected, electrically connected or communicated with each other; it can be directly connected or indirectly connected through an intermediary, or can be an internal communication of two elements or an interaction relationship between two elements, unless otherwise specifically defined. Those skilled in the art can understand the specific meanings of the above terms in this application according to specific situations.

In this application, unless otherwise clearly specified and defined, a first feature being "on" or "under" a second feature may mean that the first and second features are in a direct contact with each other, or that the first and second features are in an indirect contact with each other through an intermediary. Moreover, the first feature being "above", "over" and "on" the second feature may mean that the first feature is directly over or obliquely over the second feature, or simply mean that the first feature has a higher height than the second feature in a horizontal level. The first feature being "below", "under" and "beneath" the second feature may mean that the first feature is directly under or obliquely under the second feature, or simply mean that the first feature has a lower height than the second feature in the horizontal level.

In the above description, descriptions referring to the terms "one embodiment", "some embodiments", "example", "specific example", or "certain example" mean that specific features, structures, materials or features described in combination with the embodiment or example are included in at least one embodiment or example of this application. In this specification, it is not necessary for the schematic representations of the above terms to be directed to the same embodiment or example. Furthermore, the specific features, structures, materials or features described may be combined in suitable manners in any one or more embodiments or examples. In addition, without contradicting each other, different embodiments or examples or the features of the different embodiments or examples described in this specification may be matched and combined with each other by those skilled in the art.

In the related art, the joint box includes a shell, a sealing end cover, an electric connector and an optical connector. The shell is circular, two ends of the shell are provided with the sealing end covers respectively, and the electric connector and the optical connector are disposed outside the shell. When connecting two bundled submarine cables with multiple three-core electric circuit units that need to be connected, the cores of the two bundled submarine cables are respectively threaded through the sealing end covers at both ends of the joint box and enter the interior of the housing for connection through the electric connectors and the optical connectors. However, when there are many electric circuit units and optical units in a bundled submarine cable with multiple three-core electric circuit units, a problem that the cores of the two bundled submarine cables are connected messily in the joint box will occur.

In order to solve the above problems, this application provides a joint box for bundled submarine cables, which uses an electric connector and an optical connector to realize the connection of two bundled submarine cables. Each of the electric connector and optical connector include a male part and a female part. The male parts of the electric connector and optical connector are fixed to a male housing of a sealed cabin, and the female parts of the electric connector and the optical connector are fixed to a female housing of the sealed cabin. The sealed cabin is docked in one piece, thereby achieving a connection of respective connectors in a one-to-one correspondence, avoiding a problem that cable cores of two bundled submarine cables are connected in a disorderly manner in the joint box for bundled submarine cables. Further, the connection of the cable cores inside the joint box for the bundled submarine cables can be effectively completed to ensure safety of construction and operation.

The joint box for bundled submarine cables provided by the embodiments of this application will be described in detail below in combination with specific embodiments.

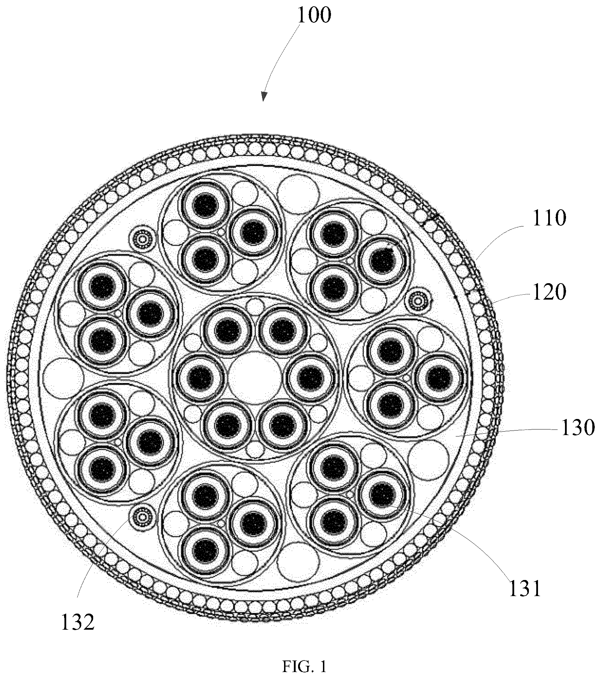

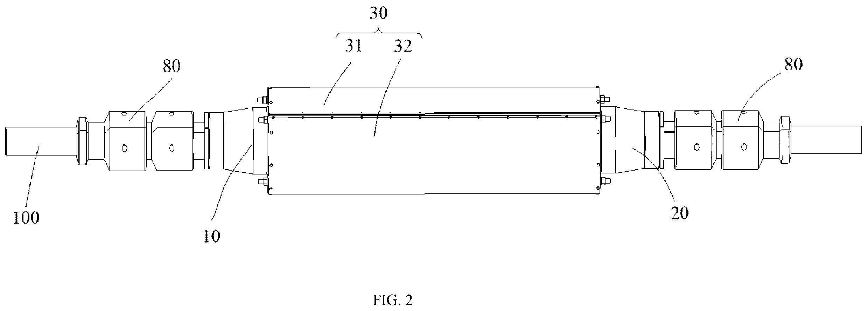

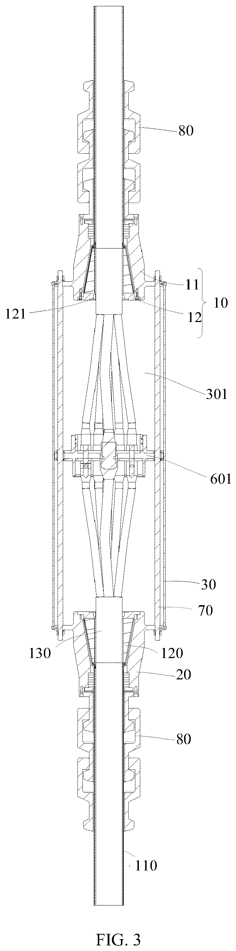

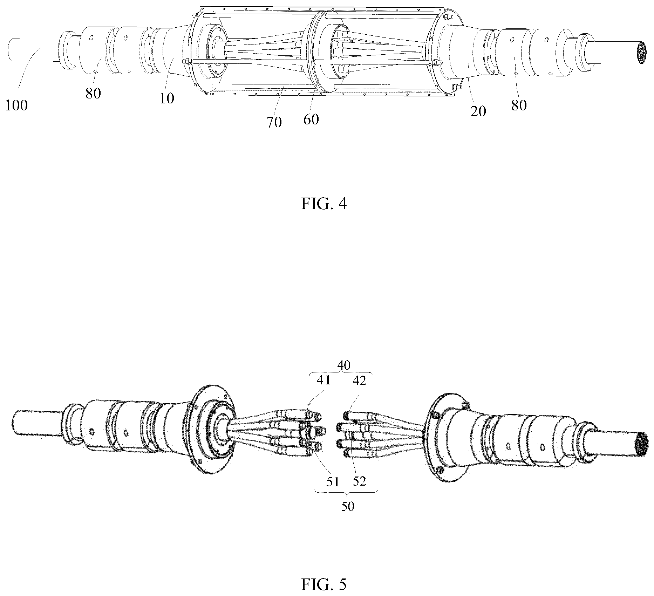

FIG. 1 is a cross-sectional structural schematic diagram of a bundled submarine cable provided by an embodiment of this application; FIG. 2 is a structural schematic diagram of a joint box for bundled submarine cables provided by an embodiment of this application; FIG. 3 is a cross-sectional structural schematic diagram of the joint box for bundled submarine cables provided in FIG. 2; FIG. 4 is a partial structural schematic diagram of the joint box for bundled submarine cables provided in FIG. 2; FIG. 5 is a partial structural schematic diagram of the joint box for bundled submarine cables provided in FIG. 4.

As shown in FIG. 1 to FIG. 5, the embodiments of this application provides a joint box for bundled submarine cables, including a first anchoring element 10, a second anchoring element 20, a protective cover 30, an electric connector 40, an optical connector 50 and a sealed cabin 60.

A bundled submarine cable 100 includes a sheath 110, an armored steel wire 120 and a cable core 130 in order from the inside to the outside. The cable core 130 includes an electric circuit unit 131 and an optical unit 132. The electric circuit unit 131 includes a plurality of three-core electric circuit units. When the bundled submarine cable 100 is damaged, it is necessary to fabricate a joint box for bundled submarine cables to repair it.

The first anchoring element 10 and the second anchoring element 20 are respectively fixed on two ends of the protective cover 30. The first anchoring element 10, the second anchoring element 20 and the protective cover 30 enclose a first sealed cavity 301. The first anchoring element 10 is configured for fixing one of the bundled submarine cables that are required to be connected and allowing the cable core of the bundled submarine cable to be extended into the first sealed cavity 301, and the second anchoring element 20 is configured for fixing the other of the bundled submarine cables that are required to be connected and allowing the cable core of the bundled submarine cable to be extended into the first sealed cavity 301.

The first sealed cavity 301 may have a cylindrical shape or other shape, which is not specifically provided herein.

The electric connector 40 includes a male electric connector 41 and a female electric connector 42. One end of the male electric connector 41 is configured to connect the electric circuit unit 131 of the cable core 130 of one of the bundled submarine cables 100 that is required to be connected; one end of the female electric connector 42 is configured to connect the electric circuit unit 131 of the cable core 130 of the other of bundled submarine cables 100 that is required to be connected; and the other end of the male electric connector 41 is connected to the other end of the female electric connector 42 in a plug-in manner.

The number of the electric connectors 40 corresponds to the number of the electric circuit units 131 of the cable core 130.

It should be noted that one electric connector 40 is configured for the electric circuit units 131 corresponding to the two cable cores 130 that are required to be connected.

The optical connector 50 includes a male optical connector 51 and a female optical connector 52. One end of the male optical connector 51 is connected to the optical unit 132 of the cable core of one of the submarine cables that are required to be connected; one end of the female optical connector 52 is configured to connect the optical unit 132 of the cable core of the other of bundled submarine cables that are required to be connected; and the other end of the optical male connector 51 is connected to the other end of the female optical connector 52 in a plug-in manner.

The number of the optical connectors 50 corresponds to the number of the optical units 132 of the cable core 130.

It should be noted that one optical connector 50 is configured for the optical units 132 corresponding to the two cable cores 130 that are required to be connected.

The sealed cabin 60 is fixed in the first sealed cavity 301, and includes a male housing 61 and a female housing 62. The male housing 61 and the female housing 62 detachably enclose a second sealed cavity 601, where, the male electric connector 41 and the male optical connector 51 are fixed to the male housing 61, and the female electric connector 42 and the female optical connector 52 are fixed on the female housing 62. The male electric connector 41 and the female electric connector 42 are plugged into the second sealed cavity 601, and the male optical connector 51 and the female optical connector 52 are plugged into the second sealed cavity 601.

The second sealed cavity 601 may have a cylindrical shape or other shape, which is not specifically provided herein.

A plurality of the male electric connectors 41 are provided on the male housing 61, and the positions of the plurality of the male electric connectors 41 correspond to the positions of the electric circuit units 131 of the cable core 130. At least one male optical connector 51 is disposed on the male housing 61, and the position of the at least one male optical connector 51 corresponds to the position of the optical unit 132 of the cable core 130.

A plurality of the female electric connectors 42 are disposed on the female housing 62, and the positions of the plurality of the female electric connectors 42 correspond to the positions of the electric circuit units 131 of the cable core 130. At least one female optical connector 52 is disposed on the female housing 62, and the position of the at least one female optical connector 52 corresponds to the position of the optical unit 132 of the cable core 130.

The plurality of the male electric connectors 41 and the plurality of the female electric connectors 42 are butted to each other in the second sealed cavity 601 in a one-by-one correspondence, such that the electric circuit units 131 of the two bundled submarine cables 100 extending into the first sealed cavity 301 are connected to each other in a one-to-one correspondence. At least one male optical connector 51 and at least one female optical connector head 52 are butted to each other in the second sealed cavity 601 in a one-to-one correspondence, such that the optical units 132 of the two bundled submarine cables 100 extending into the first sealed cavity 301 are connected to each other in a one-to-one correspondence.

In an optional embodiment, at least three male electric connectors 41 and at least one male optical connector 51 are fixed to the male housing 61, and at least three female electric connectors 42 and at least one female optical connector 52 are fixed to the female housing 62. At least three male electric connectors and at least three female electric connectors are butted to each other in the second sealed cavity 601 in a one-to-one correspondence, such that the electric circuit units 131 of the two bundled submarine cables 100 extending into the first sealed cavity 301 are connected 131 to each other in a one-to-one correspondence. At least one male optical connector and at least one female optical connector are butted to each other in the second sealed cavity 601 in a one-to-one correspondence, such that the optical units 132 of the two bundled submarine cables 100 extending into the first sealed cavity 301 are connected to each other in a one-to-one correspondence.

In the joint box for bundled submarine cables provided in the present application, the connection of two bundled submarine cables is achieved using the electric connector 40 and the optical connector 50. Each of the electric connector 40 and optical connector 50 include a male part and a female part. The male parts of the electric connector 40 and optical connector 50 are fixed to the male housing 61 of the sealed cabin 60, and the female parts of the electric connector 40 and the optical connector 50 are fixed to the female housing 62 of the sealed cabin 60. The sealed cabin 60 is docked in one piece, thereby achieving the connection of respective connectors in a one-to-one correspondence, avoiding a problem that the cable cores 130 of the two bundled submarine cables 100 are connected in a disorderly manner in the joint box for bundled submarine cables. Further, the connection of the cable cores inside the joint box for the bundled submarine cables can be effectively completed to ensure safety of construction and operation.

It should be pointed out that the electric connector 40 and the optical connector 50 are integrated on the male housing 61 and the female housing 62 of the sealed cabin 60, which achieves an overall docking and disassembly by dry-mating, avoids the problem that the cable cores 130 of the two bundled submarine cables 100 are connected to each other in a disorderly manner in the joint box for bundled submarine cables. Meanwhile, an overall size of the joint box for the bundled submarine cables is reduced, thereby ensuring safety of transportation and construction.

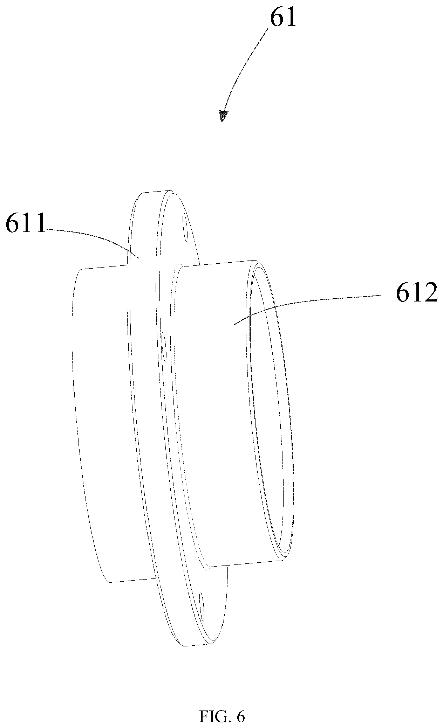

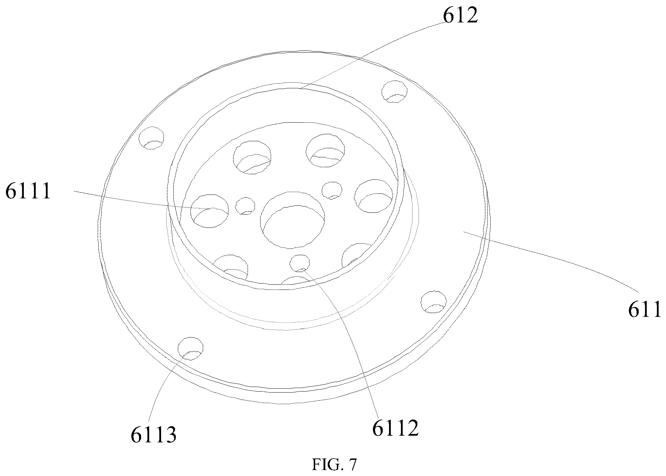

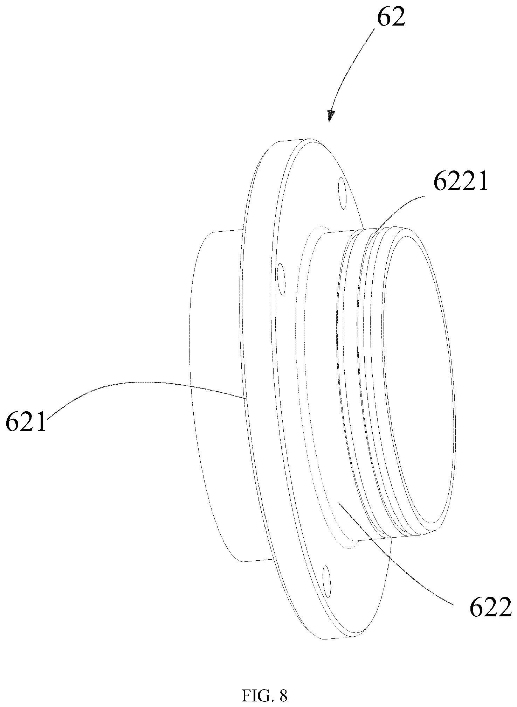

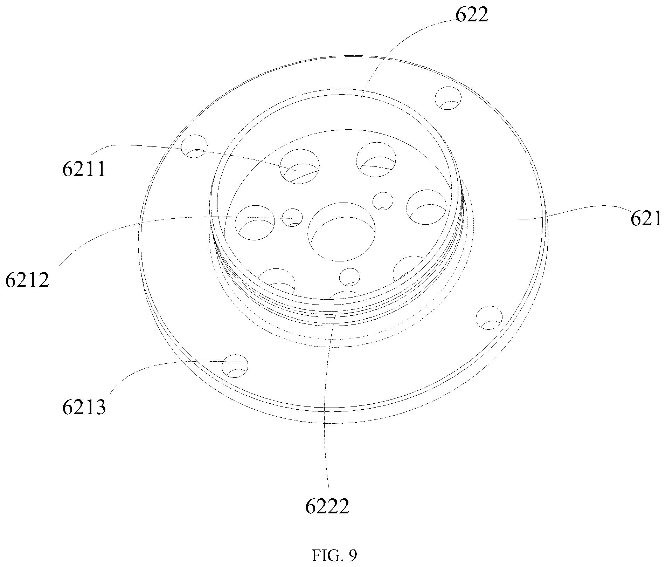

FIG. 6 is a structural schematic diagram of the male housing of the sealed cabin provided in FIG. 4; FIG. 7 is a structural schematic diagram of another state of the male housing provided in FIG. 6; FIG. 8 is a structural schematic diagram of the female housing of the sealed cabin provided in FIG. 4; FIG. 9 is a structural schematic diagram of the female housing and a sealing ring provided in FIG. 8.

Optionally, as shown in FIG. 6 and FIG. 7, the male housing 61 includes a male fixing plate 611 and a first connecting pipe 612. The male fixing plate 611 is vertically and fixedly connected with the first connecting pipe 612. The male fixing plate 611 is provided with at least three male electrical plug-in channels 6111 and at least one male optical plug-in channel 6112. The positions of the at least three male electrical plug-in channels 6111 correspond to those of the electric circuit units 131 of the bundled submarine cable 100 respectively; and the position of the at least one male optical plug-in channel 6112 corresponds to that of the optical unit 132 of the bundled submarine cable 100. The male electric connector 41 is in threaded connection with the male electrical plug-in channel 6111, and the male optical connector 51 is in threaded connection with the male optical plug-in channel 6112.

The male fixing plate 611 may have a circular shape, or other shape, which is not specifically provided here.

The male electrical plug-in channel 6111 is in a shape of cylinder. The male optical plug-in channel 6112 in a shape of cylinder.

The first connecting pipe 612 is cylindrical. The first connecting pipe 612 is fixed on the male fixing plate 611 along the axial direction of the first connecting pipe 612. The male fixing plate 611 and the first connecting pipe 612 enclose a cavity with an open end. Both of the male electrical plug-in channel 6111 and the male optical plug-in channel 6112 are communicated with the cavity of the male housing 61.

In order to improve the overall sealing performance of the sealed cabin 60, a fastening glue is provided between the male electric connector 41 and the male electrical plug-in channel 6111, and a fastening glue is provided between the male optical connector 51 and the male optical plug-in channel 6112. The fastening glue can be resin glue or other glue, which is not specifically provided here.

Optionally, as shown in FIG. 8 and FIG. 9, the female housing 62 includes a female fixing plate 621 and a second connecting pipe 622. The female fixing plate 621 is vertically and fixedly connected with the second connecting pipe 622. The female fixing plate 621 is provided with at least three female electrical plug-in channels 6211 and at least one female optical plug-in channel 6212. The positions of the at least three female electrical plug-in channels 6211 correspond to the positions of the electric circuit units 131 of the bundled submarine cable 100, and the position of the at least one female optical plug-in channel 6212 corresponds to the position of the optical unit 132 of the bundled submarine cable 100. The female electric connector 42 is in threaded connection with the female electrical plug-in channel 6211, and the female optical connector 52 is in threaded connection with the female optical plug-in channel 6212.

The female fixing plate 621 may have a circular shape, or other shape, which is not specifically provided here.

The female electrical plug-in channel 6211 is in a shape of cylinder. The female optical plug-in channel 6212 is in a shape of cylinder.

The second connecting pipe 622 is cylindrical. The second connecting pipe 622 is fixed on the female fixing plate 621 along the axial direction of the second connecting pipe 622. The female fixing plate 621 and the second connecting pipe 622 enclose a cavity with an open end, and both of the female electrical plug-in channel 6211 and the female optical plug-in channel 6212 are communicated with the cavity of the female housing 62.

In order to improve the overall sealing performance of the sealed cabin 60, fastening glue is provided between the female electric connector 42 and the female electrical plug-in channel 6211, and fastening glue is provided between the female optical connector 52 and the female optical plug-in channel 6212. The fastening glue can be resin glue or other glue, which is not specifically provided here.

In one optional embodiment, the male housing 61 is provided with one six-core male electrical plug-in channel, six three-core male electrical plug-in channels and three male optical plug-in channels. The six-core male electrical plug-in channel is located at the center of the male fixing plate 611, the six three-core male electrical plug-in channels are located outside the six-core male electrical plug-in channel, and the six three-core male electrical plug-in channels are disposed at equal intervals along the circumferential direction of the six-core male electrical plug-in channel as a center. The three male optical plug-in channels are provided between the six-core male electrical plug-in channel and the three-core male electrical plug-in channels; and the three male optical plug-in channels are provided at equal intervals along the circumferential direction of the six-core male electrical plug-in channel as a center. The six-core male electrical plug-in channel is configured to fix the six-core male electric connector 41, the three-core male electrical plug-in channel is configured to fix the three-core male electric connector 41, and the male optical plug-in channel is configured to fix the male optical connector 51. The female housing 62 is provided with a six-core female electrical plug-in channel, six three-core female electrical plug-in channels and three female optical plug-in channels. The six-core female electrical plug-in channel is located at the center of the female fixing plate 621, the six three-core female electrical plug-in channels are located outside the six-core female electrical plug-in channel, and the six three-core female electrical plug-in channels are disposed at equal intervals along the circumferential direction of the six-core female electrical plug-in channel as a center. The three female optical plug-in channels are provided between the six-core female electrical plug-in channel and the three-core female electrical plug-in channels, and the three female optical plug-in channels are provided at equal intervals along the circumferential direction of the six-core female electrical plug-in channel as a center. The six-core female electrical plug-in channel is configured to fix the six-core female electric connector 42, the three-core male electrical plug-in channel is configured to fix the three-core male electric connector 42, and the female optical plug-in channel is configured to fix the female optical connector 52.

When the sealed cabin 60 is installed, the second connecting pipe 622 of the female housing 62 is plugged into the first connecting pipe 612 of the male housing 61, the second connecting pipe 622 abuts against the male fixing plate 611, and the first connecting pipe 612 abuts against the female fixing plate 621. The male fixing plate 611, the first connecting pipe 612, the female fixing plate 621 and the second connecting pipe 622 enclose the second sealed cavity 601. The male electric connectors 41 on the male housing 61 are connected with the female electric connectors 42 of the female housing 62 in a one-to-one correspondence, and the male optical connectors 51 on the male housing 61 are connected with the female optical connectors 52 in a one-to-one correspondence, which realizes the integral docking of the electric connectors 40 and the optical connectors 50 in the sealed cabin 60, thereby reducing operation time and saving construction costs, and lowering a risk of rework at the same time.

When the sealed cabin 60 is disassembled, the male housing 61 and the female housing 62 move toward opposite directions, so that the electric connectors 40 and the optical connectors 50 in the sealed cabin 60 are disassembled in one piece.

It should be noted that when the joint box for bundled submarine cables is used, the male housing 61 and the female housing 62 can be respectively assembled with the cable cores 130 of the bundled submarine cables 100 in the supplier's factory, on the shore wharf, or on a construction ship with better assembling conditions, etc., and then the docking installation and underwater construction are quickly completed at sea.

Optionally, a sealing groove 6221 and a sealing ring 6222 are provided on an outer wall of the second connecting pipe 622. The sealing ring 6222 is installed in the sealing groove 6221, which is arranged along the circumferential direction of the second connecting pipe 622. A plurality of sealing grooves 6221 are arranged at equal intervals in the axial direction of the second connecting pipe 622, and each sealing groove 6221 is equipped with a sealing ring 6222. In this way, the overall sealing can be realized after the cable cores 130 are connected, so that the joint box for bundled submarine cables meets the ultra deep sealing requirements.

The sealing ring 6222 can be an O-shaped rubber ring, or other rubber ring, which is not specifically provided here.

It should be noted, optionally, the joint box for bundled submarine cables further includes adjustment screws 70 located in the first sealed cavity 301. The adjustment screw 70 are connected to the first anchoring element 10, the second anchoring element 20, the male housing 61 and the female housing 62; and the adjustment screw 70 is configured for butting and separation of the male housing 61 and the female housing 62.

The number of adjustment screws 70 is even. The adjustment screw 70 is adjusted using a symmetrical manner to ensure that the displacement and stress of the sealed cabin 60 is uniform and the sealing ring is not damaged.

In an optional embodiment, the male housing 61 is provided with four first screw holes 6113 arranged at equal intervals along its circumferential direction; the female housing 62 is provided with four second screw holes 6213 arranged at equal intervals along its circumferential direction. Each first screw hole 6113 of the male housing 61 and corresponding second screw hole 6213 of the female housing are configured with one adjustment screw 70. The adjustment screw 70 is provided with left-handed screw-thread and right-handed screw-thread, where the first lead screw hole 6113 is matched with the left-handed screw-thread of the adjustment screw 70, and the second screw hole 6213 is matched with the right-handed screw-thread of the adjustment screw 70. In this way, the docking and separation of the male housing 61 and the female housing 62 are realized, and then an accurate and slow docking of the electric connectors 40 and the optical connectors 50 on the sealed cabin 60 is realized, thereby avoiding uneven application of force or crushing of the sealing ring 6222 caused by manual docking.

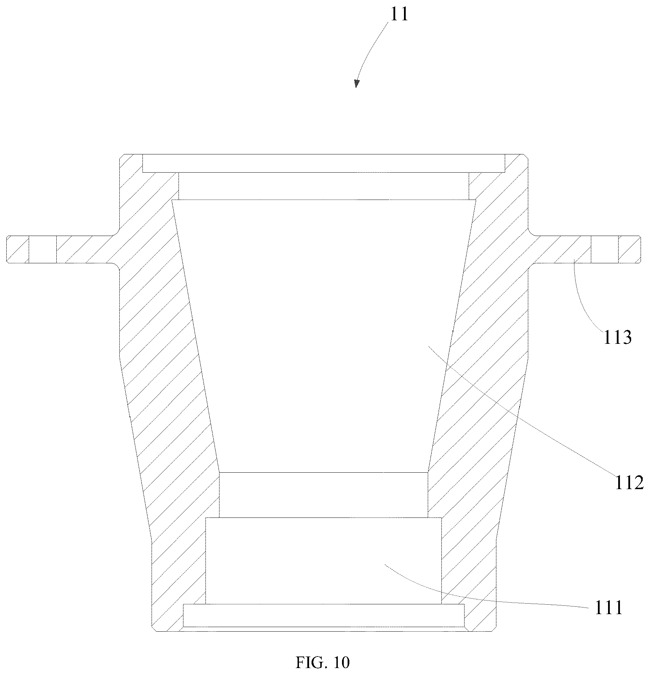

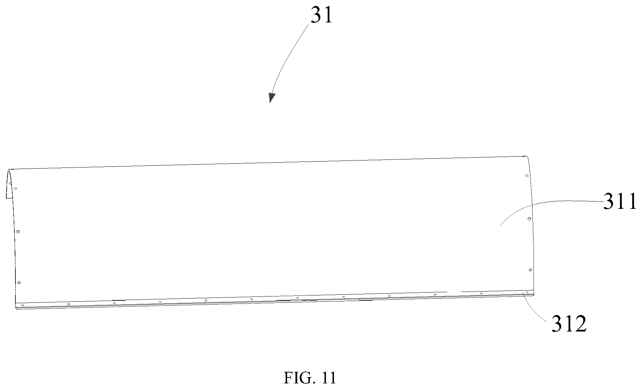

FIG. 10 is a structural schematic diagram of a first anchoring body of a first anchoring element provided in FIG. 2; FIG. 11 is a structural schematic diagram of a first cover body of the protective cover provided in FIG. 2.

Optionally, the first anchoring element 10 includes a first anchoring body 11 and a first fixing baffle 12. The first anchoring body 11 is provided with a sheath hole 111 on one end thereof and a cavity 112 on the other end thereof; the cavity 112 of the first anchoring body 11 runs through the other end of the first anchoring body 11. The cavity 112 of the first anchoring body 11 is communicated with the sheath hole 111, and the first fixing baffle 12 is fixed to the other end of the first anchoring body 11. The first fixing baffle 12 is provided with a cable-core hole 121, through which the cable core 130 of the bundled submarine cable 100 pass.

The sheath hole 111 has a cylindrical shape, and is configured to confine and fix the sheath 110 of one of the bundled submarine cables 100 in need of connection.

The cavity 112 is in a shape of an inverted frustum of cone. The cavity 112 is configured to confine and fix umbrella-shaped armored steel wires 120 of one of the bundled submarine cables 100 in need of connection.

It should be noted that when the bundled submarine cable 100 is anchored, the sheath 110 is cut off at a designated position, and the armored steel wires 120 are cut off at a designated position.

The outer side of the first anchoring body 11 is provided with a first fixing plate 113 having a cylindrical shape, and the first fixing plate 113 is configured for fixed connection with the protective cover 30.

A second anchoring element 20 has a same structure as the first anchoring element 10. The second anchoring element 20 includes a second anchoring body and a second fixing baffle. The second anchoring body is provided with a same sheath hole as the sheath hole 111 of the first anchoring body 11 on one end thereof; the second anchoring body is provided with a same cavity as the cavity 112 of the first anchoring body 11 on the other hand thereof; and the second fixing baffle is provided with a same cable-core hole as the cable-core hole 121 of the first fixing baffle 12. The second anchoring body is provided with a same second fixing plate as the first fixing plate 113 of the first anchoring body 11. The second fixing plate has a cylindrical shape and is configured for fixed connection with the protective cover 30.

The protective cover 30 is a Harvard-type protective cover, and includes a first cover body 31 and a second cover body 32. The first cover body 31 and the second cover body 32 are docked to enclose a cylindrical cavity. The first fixing plate 113 and the second fixing plate are fixed on both ends of the cylindrical cavity of the protective cover 30, respectively.

Specifically, the first cover body 31 is provided with a sealing wall 311 and two fixing walls 312, the sealing wall 311 has a semi-circular ring shape, the two fixing walls 312 have a rectangular shape, and the two fixing walls 312 are located in a radial direction of the sealing wall 311. A plurality of threaded holes are provided at both ends of the sealing wall 311 in the axial direction thereof, and the threaded holes at both ends of the sealing wall 311 are arranged at equal intervals along the circumferential direction thereof. The fixing wall 312 is provided with a plurality of threaded holes, which are arranged at equal intervals along the axial direction of the protective cover 30. The second cover body 32 has a same shape as the first cover body 31.

The first cover body 31 and the second cover body 32 are fixedly connected with each other by bolts, the first cover body 31 is fixedly respectively connected with the first fixing plate 113 and the second fixing plate by a bolt, and the second cover body 32 is respectively connected with the first fixing plate 113 and the second fixing plate by a bolt. The first cover body 31, the second cover body 32, the first fixing plate 113 and the second fixing plate enclose the first sealed cavity 301, which can prevent seawater from entering the first sealed cavity 301, so as to realize the protection for the cable cores 130 and the sealed cabin 60, and allow the joint box for bundled submarine cables to meet the ultra deep construction load requirements, and also to meet the protection requirements of deep-water pressure.

Optionally, the joint box for bundled submarine cables further includes a bending limiter 80, and the first anchoring element 10 and the second anchoring element 20 are each connected to one bending limiter 80 away from the protective cover 30, so as to realize bending-restricted protection for the bundled submarine cable.

The bending limiter 80 includes a plurality of hollow cylinders. One end of each hollow cylinder is provided with an annular groove, and the other end of the hollow cylinder is provided with an annular protrusion. One hollow cylinder of two adjacent hollow cylinders has an annular groove snap-connected with the annular protrusion of the other one of the two adjacent hollow cylinders.

Finally, it should be noted that the above embodiments are only used to illustrate the technical solutions of this application, and are not intended to limit them. Although this application has been described in detail with reference to the foregoing embodiments, those skilled in the art should understand that it is still possible to modify the technical solutions described in each of foregoing embodiments, or perform an equivalent replacement for some or all of the technical features thereof. These modifications or replacements will not make the essence of the corresponding technical solutions deviate from the scope of the technical solutions of the various examples of the present application.

## Claims

1. A joint box for bundled submarine cables (100) comprising a first anchoring element (10), a second anchoring element (20), a protective cover (30), at least three electric connectors (40), at least one optical connector (50) and a sealed cabin (60);
the first anchoring element (10) and the second anchoring element (20) are respectively fixed at both ends of the protective cover (30), a first sealed cavity (301) is enclosed by the first anchoring element (10), the second anchoring element (20) and the protective cover (30), the sealed cabin (60) is fixed in the first sealed cavity (301) and comprises a male housing (61) and a female housing (62), and the male housing (61) and the female housing (62) enclose a second sealed cavity (601) in a detachable manner;
the electric connector (40) comprises a male electric connector (41) and a female electric connector (42), the optical connector (50) comprises a male optical connector (51) and a female optical connector (52), at least three male electric connectors (41) and at least one male optical connector (51) are fixed on the male housing (61), at least three female electric connectors (42) and at least one female optical connector (52) are fixed on the female housing (62), at least three male electric connectors (41) and at least three female electric connectors (42) are connected to each other in the second sealed cavity (601) in a one-to-one correspondence such that electric circuit units (131) of two bundled submarine cables (100) extending into the first sealed cavity (301) are connected to each other in a one-to-one correspondence, and at least one male optical connector (51) and at least one female optical connector (52) are connected to each other in the second sealed cavity (601) in a one-to-one correspondence such that optical units (132) of two bundled submarine cables (100) extending into the first sealed cavity (301) are connected to each other in a one-to-one correspondence;
the joint box for bundled submarine cables (100) further comprises an adjustment screw (70), the adjustment screw (70) is located in the first sealed cavity (301) and connected to the first anchoring element (10), the second anchoring element (20), the male housing (61) and the female housing (62), and the adjustment screw (70) is configured for docking and separation of the male housing (61) and the female housing (62);
the male housing (61) is provided with four first screw holes (6113) which are disposed at equal intervals along a circumferential direction of the male housing (61); the female housing (62) is provided with four second screw holes (6213) which are arranged at equal intervals along a circumferential direction of the female housing (62);
one adjustment screw (70) is configured for each first screw hole (6113) of the male housing (61) and corresponding second screw hole (6213) of the female housing (62), and the adjustment screw (70) is provided with left-handed screw-threads and right-handed screw-threads; the first screw hole (6113) is matched with the left-handed screw-threads of the adjustment screw (70), and the second screw hole (6213) is matched with the right-handed screw-threads of the adjustment screw (70).

2. The joint box for bundled submarine cables (100) according to claim 1, wherein the male housing (61) comprises a male fixing plate (611) and a first connecting pipe (612), and the male fixing plate (611) is vertically and fixedly connected with the first connecting pipe (612); the male fixing plate (611) is provided with at least three male electrical plug-in channels (6111) and at least one male optical plug-in channel (6112); positions of the at least three male electrical plug-in channels (6111) correspond to those of the electric circuit units (131) of the bundled submarine cable (100), and a position of the at least one male optical plug-in channel (6112) corresponds to that of the optical unit (132) of the bundled submarine cable (100); the male electric connector (41) and the male electrical plug-in channel (6111) are connected to each other in a threaded manner, and the male optical connector (51) and the male optical plug-in channel (6112) are connected to each other in a threaded manner;
the female housing (62) comprises a female fixing plate (621) and a second connecting pipe (622), the female fixing plate (621) is vertically fixedly connected with the second connecting pipe (622); the female fixing plate (621) is provided with at least three female electrical plug-in channels (6211) and at least one female optical plug-in channel (6212); positions of the at least three female electrical plug-in channels (6211) correspond to those of the electric circuit units (131) of the bundled submarine cable (100), and a position of the at least one female optical plug-in channel (6212) corresponds to that of the optical unit (132) of the bundled submarine cable (100); the female electric connector (42) and the female electrical plug-in channel (6211) are connected to each other in a threaded manner, and the female optical connector (52) and the female optical plug-in channel (6212) are connected to each other in a threaded manner.

3. The joint box for bundled submarine cables (100) according to claim 2, wherein the male fixing plate (611) and the first connecting pipe (612) enclose a cavity with an open end, and the female fixing plate (621) and the second connecting pipe (622) enclose a cavity with an open end; the second connecting pipe (622) is plugged into the first connecting pipe (612) and abuts against the male fixing plate (611), and the first connecting pipe (612) abuts against the female fixing plate (621), and the male fixing plate (611), the first connecting pipe (612), the female fixing plate (621) and the second connecting pipe (622) enclose the second sealed cavity (601).

4. The joint box for bundled submarine cables (100) according to claim 3, wherein an outer wall of the second connecting pipe (622) is provided with a sealing groove (6221) and a sealing ring, the sealing ring is installed in the sealing groove (6221), the sealing groove (6221) is arranged along a circumferential direction of the second connecting pipe (622), and a plurality of the sealing grooves (6221) are arranged at equal intervals in an axial direction of the second connecting pipe (622).

5. The joint box for bundled submarine cables (100) according to claim 3, wherein a fastening glue is provided between the male electric connector (41) and the male electrical plug-in channel (6111), and the fastening glue is provided between the male optical connector (51) and male optical plug-in channel (6112); the fastening glue is provided between the female electric connector (42) and the female electrical plug-in channel (6211), and the fastening glue is provided between the female optical connector (52) and female optical plug-in channel (6212).

6. The joint box for bundled submarine cables (100) according to any one of claims 2-5, wherein the male housing (61) is provided with a six-core male electrical plug-in channel, six three-core male electrical plug-in channels and three male optical plug-in channels (6112); the six-core male electrical plug-in channel is located at a center of the male fixing plate (611), the six three-core male electrical plug-in channels are located outside the six-core male electrical plug-in channel, the six three-core male electrical plug-in channels are arranged at equal intervals along a circumferential direction of the six-core male electrical plug-in channel as a center, and the three male optical plug-in channels (6112) are arranged between the six-core male electrical plug-in channel and the three-core male electrical plug-in channels, and the three male optical plug-in channels (6112) are arranged at equal intervals along the circumferential direction of the six-core male electrical plug-in channel as a center.

7. The joint box for bundled submarine cables (100) according to any one of claims 1-5, wherein the first anchoring element (10) comprises a first anchoring body (11) and a first fixing baffle (12); one end of the first anchoring body (11) is provided a sheath hole (111), and the other end of the first anchoring body (11) is provided with a cavity, the cavity of the first anchoring body (11) runs through the other end of the first anchoring body (11) and is communicated with the sheath hole (111); the first fixing baffle (12) is fixed with the other end of the first anchoring body (11) and is provided with a cable-core hole, through which the cable core (130) of the bundled submarine cable (100) passes; the second anchoring element (20) comprises a second anchoring body and a second fixing baffle, one end of the second anchoring body is provided with a sheath hole (111), and the other end of the second anchoring body is provided with a cavity (112); the cavity (112) of the second anchoring body runs through the other end of the second anchoring body and is communicated with the sheath hole (111), the second fixing baffle is fixed with the other end of the second anchoring body, and the second fixing baffle is provided with a cable-core hole, through which the cable core (130) of the bundled submarine cable (100) passes;
the protective cover (30) comprises a first cover body (31) and a second cover body (32); the first cover body (31) and the second cover body (32) are docked to enclose a cylindrical cavity; and a fixing plate is provided outside the first anchoring body (11), a second fixing plate is provided outside the second anchoring body, and the first fixing plate (113) and the second fixing plate are fixed at both ends of the cylindrical cavity respectively.

8. The joint box for bundled submarine cables (100) according to claim 7, further comprising a bending limiter (80), the first anchoring element (10) and the second anchoring element (20) are each connected to one bending limiter (80) at an end away from the protective cover (30);
the bending limiter (80) comprises a plurality of hollow cylinders, one end of each hollow cylinder is provided with an annular groove, the other end of the hollow cylinder is provided with an annular protrusion, and one hollow cylinder of two adjacent hollow cylinders has the annular groove that is snap-connected with the annular protrusion of the other one of two adjacent hollow cylinders.

## Patentansprüche

1. Verbindungsmuffe für gebündelte Seekabel (100), die ein erstes Verankerungselement (10), ein zweites Verankerungselement (20), eine Schutzabdeckung (30), wenigstens drei elektrische Anschlussstücke (40), wenigstens ein optisches Anschlussstück (50) und eine abgedichtete Kammer (60) umfasst;
wobei das erste Verankerungselement (10) und das zweite Verankerungselement (20) jeweils an beiden Enden der Schutzabdeckung (30) befestigt sind, ein erster abgedichteter Hohlraum (301) von dem ersten Verankerungselement (10), dem zweiten Verankerungselement (20) und der Schutzabdeckung (30) umschlossen wird, die abgedichtete Kammer (60) in dem ersten abgedichteten Hohlraum (301) befestigt ist und ein männliches Gehäuse (61) und ein weibliches Gehäuse (62) umfasst und das männliche Gehäuse (61) und das weibliche Gehäuse (62) einen zweiten abgedichteten Hohlraum (601) auf lösbare Art umschließen;
das elektrische Anschlussstück (40) ein männliches elektrisches Anschlussstück (41) und weibliches elektrisches Anschlussstück (42) umfasst, das optische Anschlussstück (50) ein männliches optisches Anschlussstück (51) und ein weibliches optisches Anschlussstück (52) umfasst, wenigstens drei männliche elektrische Anschlussstücke (41) und wenigstens ein männliches optisches Anschlussstück (51) an dem männlichen Gehäuse (61) befestigt sind, wenigstens drei weibliche elektrische Anschlussstücke (42) und wenigstens ein weibliches optisches Anschlussstück (52) an dem weiblichen Gehäuse (62) befestigt sind, wenigstens drei männliche elektrische Anschlussstücke (41) und wenigstens drei weibliche elektrische Anschlussstücke (42) in dem zweiten abgedichteten Hohlraum (601) in einer Eins-zu-Eins-Entsprechung miteinander verbunden sind, sodass elektrische Schaltungseinheiten (131) von zwei gebündelten Seekabeln (100), die sich in den ersten abgedichteten Hohlraum (301) erstrecken, in einer Eins-zu-Eins-Entsprechung miteinander verbunden sind, und wenigstens ein männliches optisches Anschlussstück (51) und wenigstens ein weibliches optisches Anschlussstück (52) in dem zweiten abgedichteten Hohlraum (601) in einer Eins-zu-Eins-Entsprechung miteinander verbunden sind, sodass optische Einheiten (132) von zwei gebündelten Seekabeln (100), die sich in den ersten abgedichteten Hohlraum (301) erstrecken, in einer Eins-zu-Eins-Entsprechung miteinander verbunden sind;
die Verbindungsmuffe für gebündelte Seekabel (100) ferner eine Einstellschraube (70) umfasst, wobei sich die Einstellschraube (70) in dem ersten abgedichteten Hohlraum (301) befindet und mit dem ersten Verankerungselement (10), dem zweiten Verankerungselement (20), dem männlichen Gehäuse (61) und dem weiblichen Gehäuse (62) verbunden ist, und die Einstellschraube (70) dazu konfiguriert ist, das männliche Gehäuse (61) und das weibliche Gehäuse (62) zusammenzustecken und zu trennen;
das männliche Gehäuse (61) mit vier ersten Schraubenlöchern (6113) versehen ist, die in gleichen Abständen entlang einer Umfangsrichtung des männlichen Gehäuses (61) angeordnet sind; das weibliche Gehäuse (62) mit vier zweiten Schraubenlöcher (6213) versehen ist, die in gleichen Abständen entlang einer Umfangsrichtung des weiblichen Gehäuses (62) angeordnet sind;
für jedes erste Schraubenloch (6113) des männlichen Gehäuses (61) und das entsprechende zweite Schraubenloch (6213) des weiblichen Gehäuses (62) jeweils eine Einstellschraube (70) konfiguriert ist, wobei die Einstellschraube (70) mit Linksschraubengewinden und Rechtsschraubengewinden versehen ist; das erste Schraubenloch (6113) auf das Linksschraubengewinde der Einstellschraube (70) abgestimmt ist und das zweite Schraubenloch (6213) auf das Rechtsschraubengewinde der Einstellschraube (70) abgestimmt ist.

2. Verbindungsmuffe für gebündelte Seekabel (100) nach Anspruch 1, wobei das männliche Gehäuse (61) eine männliche Befestigungsplatte (611) und ein erstes Verbindungsrohr (612) umfasst und die männliche Befestigungsplatte (611) vertikal und fest mit dem ersten Verbindungsrohr (612) verbunden ist; die männliche Befestigungsplatte (611) mit wenigstens drei elektrischen männlichen Einsteckkanälen (6111) und wenigstens einem männlichen optischen Einsteckkanal (6112) versehen ist; Positionen der wenigstens drei männlichen elektrischen Einsteckkanäle (6111) denen der elektrischen Schaltungseinheiten (131) des gebündelten Seekabels (100) entsprechen und eine Position des wenigstens einen männlichen optischen Einsteckkanals (6112) denen der optischen Einheit (132) des gebündelten Seekabels (100) entspricht; das elektrische männliche Anschlussstück (41) und der männliche elektrische Einsteckkanal (6111) miteinander verschraubt sind und das männliche optische Anschlussstück (51) und der männliche optische Einsteckkanal (6112) miteinander verschraubt sind;
das weibliche Gehäuse (62) eine weibliche Befestigungsplatte (621) und ein zweites Verbindungsrohr (622) umfasst, wobei die weibliche Befestigungsplatte (621) vertikal fest mit dem zweiten Verbindungsrohr (622) verbunden ist; die weibliche Befestigungsplatte (621) mit wenigstens drei weiblichen elektrischen Einsteckkanälen (6211) und wenigstens einem weiblichen optischen Einsteckkanal (6212) versehen ist; die Positionen der wenigstens drei weiblichen elektrischen Einsteckkanäle (6211) denen der elektrischen Schaltungseinheiten (131) des gebündelten Seekabels (100) entsprechen und eine Position des wenigstens einen weiblichen optischen Einsteckkanals (6212) denen der optischen Einheit (132) des gebündelten Seekabels (100) entspricht; das weibliche elektrische Anschlussstück (42) und der weibliche elektrische Einsteckkanal (6211) miteinander verschraubt sind und das weibliche optische Anschlussstück (52) und der weibliche optische Einsteckkanal (6212) miteinander verschraubt sind.

3. Verbindungsmuffe für gebündelte Seekabel (100) nach Anspruch 2, wobei die männliche Befestigungsplatte (611) und das erste Verbindungsrohr (612) einen Hohlraum mit einem offenen Ende umschließen und die weibliche Befestigungsplatte (621) und das zweite Verbindungsrohr (622) einen Hohlraum mit einem offenen Ende umschließen; das zweite Verbindungsrohr (622) in das erste Verbindungsrohr (612) eingesteckt ist und an der männlichen Befestigungsplatte (611) anliegt und das erste Verbindungsrohr (612) an der weiblichen Befestigungsplatte (621) anliegt und die männliche Befestigungsplatte (611), das erste Verbindungsrohr (612), die weibliche Befestigungsplatte (621) und das zweite Verbindungsrohr (622) den zweiten abgedichteten Hohlraum (601) umschließen.

4. Verbindungsmuffe für gebündelte Seekabel (100) nach Anspruch 3, wobei eine Außenwand des zweiten Verbindungsrohrs (622) mit einer Dichtungsnut (6221) und einem Dichtungsring versehen ist, der Dichtungsring in der Dichtungsnut (6221) installiert ist, die Dichtungsnut (6221) entlang einer Umfangsrichtung des zweiten Verbindungsrohrs (622) angeordnet ist und eine Mehrzahl von Dichtungsnuten (6221) in gleichen Abständen in einer axialen Richtung des zweiten Verbindungsrohrs (622) angeordnet sind.

5. Verbindungsmuffe für gebündelte Seekabel (100) nach Anspruch 3, wobei zwischen dem männlichen elektrischen Anschlussstück (41) und dem männlichen elektrischen Einsteckkanal (6111) ein Befestigungskleber bereitgestellt wird und der Befestigungskleber zwischen dem männlichen optischen Anschlussstück (51) und dem männlichen optischen Einsteckkanal (6112) bereitgestellt wird; der Befestigungskleber zwischen dem weiblichen elektrischen Anschlussstück (42) und dem weiblichen elektrischen Einsteckkanal (6211) bereitgestellt wird und der Befestigungskleber zwischen dem weiblichen optischen Anschlussstück (52) und dem weiblichen optischen Einsteckkanal (6212) bereitgestellt wird.

6. Verbindungsmuffe für gebündelte Seekabel (100) nach einem der Ansprüche 2-5, wobei das männliche Gehäuse (61) mit einem männlichen elektrischen Einsteckkanal mit sechs Kernen, sechs männlichen elektrischen Einsteckkanälen mit drei Kernen und drei männliche optische Einsteckkanälen (6112) versehen ist; sich der männliche elektrische Einsteckkanal mit sechs Kernen in der Mitte der männlichen Befestigungsplatte (611) befindet, sich die sechs männlichen elektrischen Einsteckkanäle mit drei Kernen außerhalb des männlichen elektrischen Einsteckkanals mit sechs Kernen befinden, die sechs männlichen elektrischen Einsteckkanäle mit drei Kernen in gleichen Abständen entlang einer Umfangsrichtung des männlichen elektrischen Einsteckkanals mit sechs Kernen als Mitte angeordnet sind, und die drei männlichen optischen Einsteckkanäle (6112) zwischen dem männlichen elektrischen Einsteckkanal mit sechs Kernen und den männlichen elektrischen Einsteckkanälen mit drei Kernen angeordnet sind, und die drei männlichen optischen Einsteckkanäle (6112) in gleichen Abständen entlang der Umfangsrichtung des männlichen elektrischen Einsteckkanal mit sechs Kernen als Mitte angeordnet sind.

7. Verbindungsmuffe für gebündelte Seekabel (100) nach einem der Ansprüche 1-5, wobei das erste Verankerungselement (10) einen ersten Verankerungskörper (11) und ein erstes Befestigungsleitblech (12) umfasst; ein Ende des ersten Verankerungskörpers (11) mit einer Mantelbohrung (111) versehen ist und das andere Ende des ersten Verankerungskörpers (11) mit einem Hohlraum versehen ist, wobei der Hohlraum des ersten Verankerungskörpers (11) durch das andere Ende des ersten Verankerungskörpers (11) verläuft und mit der Mantelbohrung (111) in Verbindung steht; das erste Befestigungsleitblech (12) an dem anderen Ende des ersten Verankerungskörpers (11) befestigt ist und mit einer Kabelkernbohrung versehen ist, durch die der Kabelkern (130) des gebündelten Seekabels (100) verläuft; das zweite Verankerungselement (20) einen zweiten Verankerungskörper und ein zweites Befestigungsleitblech umfasst; ein Ende des zweiten Verankerungskörpers mit einer Mantelbohrung (111) versehen ist und das andere Ende des zweiten Verankerungskörpers mit einem Hohlraum (112) versehen ist; der Hohlraum (112) des zweiten Verankerungskörpers durch das andere Ende des zweiten Verankerungskörpers verläuft und mit der Mantelbohrung (111) in Verbindung steht, das zweite Befestigungsleitblech an dem anderen Ende des zweiten Verankerungskörpers befestigt ist und mit einer Kabelkernbohrung versehen ist, durch die der Kabelkern (130) des gebündelten Seekabels (100) verläuft;
die Schutzabdeckung (30) einen ersten Abdeckungskörper (31) und einen zweiten Abdeckungskörper (32) umfasst; der erste Abdeckkörper (31) und der zweite Abdeckkörper (32) so ineinander eingesteckt sind, dass sie einen zylindrischen Hohlraum umschließen; und außerhalb des ersten Verankerungskörpers (11) eine Befestigungsplatte bereitgestellt ist, außerhalb des zweiten Verankerungskörpers eine zweite Befestigungsplatte bereitgestellt ist, und die erste Befestigungsplatte (113) und die zweite Befestigungsplatte jeweils an beiden Enden des zylindrischen Hohlraums befestigt sind.

8. Verbindungsmuffe für gebündelte Seekabel (100) nach Anspruch 7, die ferner einen Biegebegrenzer (80) umfasst, wobei das erste Verankerungselement (10) und das zweite Verankerungselement (20) jeweils an einem von der Schutzabdeckung (30) abgewandten Ende mit einem Biegebegrenzer (80) verbunden sind;
der Biegebegrenzer (80) eine Mehrzahl von Hohlzylindern umfasst, wobei ein Ende jedes Hohlzylinders mit einer ringförmigen Nut versehen ist, das andere Ende des Hohlzylinders mit einem ringförmigen Vorsprung versehen ist und ein Hohlzylinder der zwei benachbarten Hohlzylinder die ringförmige Nut aufweist, die mit dem ringförmigen Vorsprung des anderen der zwei benachbarten Hohlzylinder schnappverbunden ist.

## Revendications

1. Boîte de jonction de câbles sous-marins en faisceau (100) comprenant un premier élément d'ancrage (10), un deuxième élément d'ancrage (20), un couvercle de protection (30), au moins trois connecteurs électriques (40), au moins un connecteur optique (50) et une cabine étanche (60),
le premier élément d'ancrage (10) et le deuxième élément d'ancrage (20) sont respectivement fixés aux deux extrémités du couvercle de protection (30), une première cavité étanche (301) est délimitée par le premier élément d'ancrage (10), le deuxième élément d'ancrage (20) et le couvercle de protection (30), la cabine étanche (60) est fixée dans la première cavité étanche (301) et comprend un boîtier mâle (61) et un boîtier femelle (62), et les boîtiers mâle (61) et femelle (62) délimitent une deuxième cavité étanche (601) de manière amovible,
le connecteur électrique (40) comprend un connecteur électrique mâle (41) et un connecteur électrique femelle (42), le connecteur optique (50) comprend un connecteur optique mâle (51) et un connecteur optique femelle (52), au moins trois connecteurs électriques mâles (41) et au moins un connecteur optique mâle (51) sont fixés sur le boîtier mâle (61), au moins trois connecteurs électriques femelles (42) et au moins un connecteur optique femelle (52) sont fixés sur le boîtier femelle (62), au moins trois connecteurs électriques mâles (41) et au moins trois connecteurs électriques femelles (42) sont raccordés les uns aux autres dans la deuxième cavité étanche (601) en correspondance biunivoque de telle façon que les unités de circuit électrique (131) de deux câbles sous-marins en faisceau (100) pénétrant dans la première cavité étanche (301) sont raccordées l'une à l'autre en correspondance biunivoque, et au moins un connecteur optique mâle (51) et au moins un connecteur optique femelle (52) sont raccordés l'un à l'autre dans la deuxième cavité étanche (601) en correspondance biunivoque de telle façon que les unités optiques (132) de deux câbles sous-marins en faisceau (100) pénétrant dans la première cavité étanche (301) sont raccordées l'une à l'autre en correspondance biunivoque,
la boîte de jonction de câbles sous-marins en faisceau (100) comprend en outre une vis de réglage (70), la vis de réglage (70) est située dans la première cavité étanche (301) et raccordée au premier élément d'ancrage (10), au deuxième élément d'ancrage (20), au boîtier mâle (61) et au boîtier femelle (62), et la vis de réglage (70) est conçue pour l'arrimage et le démontage du boîtier mâle (61) et du boîtier femelle (62),
le boîtier mâle (61) est pourvu de quatre premiers trous de vis (6113) qui sont agencés à intervalles réguliers dans la direction circonférentielle du boîtier mâle (61), le boîtier femelle (62) est pourvu de quatre deuxièmes trous de vis (6213) qui sont agencés à intervalles réguliers dans la direction circonférentielle du boîtier femelle (62),
une vis de réglage (70) est conçue pour chaque premier trou de vis (6113) du boîtier mâle (61) et pour chaque deuxième trou de vis (6213) correspondant du boîtier femelle (62), et la vis de réglage (70) est pourvue de filetages à gauche et de filetages à droite, le premier trou de vis (6113) est adapté aux filetages à gauche de la vis de réglage (70), et le deuxième trou de vis (6213) est adapté aux filetages à droite de la vis de réglage (70).

2. Boîte de jonction de câbles sous-marins en faisceau (100) selon la revendication 1, dans laquelle le boîtier mâle (61) comprend une plaque de fixation mâle (611) et un premier tube de raccordement (612), et la plaque de fixation mâle (611) est raccordée de manière verticale et fixe au premier tube de raccordement (612), la plaque de fixation mâle (611) est pourvue d'au moins trois canaux d'enfichage électrique mâles (6111) et d'au moins un canal d'enfichage optique mâle (6112), les positions des au moins trois canaux d'enfichage électrique mâles (6111) correspondent à celles des unités de circuit électrique (131) des câbles sous-marins en faisceau (100), et la position du ou des canaux d'enfichage optique mâles (6112) correspond à celle de l'unité optique (132) des câbles sous-marins en faisceau (100), le connecteur électrique mâle (41) et le canal d'enfichage électrique mâle (6111) sont raccordés l'un à l'autre par filetage, et le connecteur optique mâle (51) et le canal d'enfichage optique mâle (6112) sont raccordés l'un à l'autre par filetage,
le boîtier femelle (62) comprend une plaque de fixation femelle (621) et un deuxième tube de raccordement (622), et la plaque de fixation femelle (621) est raccordée de manière verticale fixe au deuxième tube de raccordement (622), la plaque de fixation femelle (621) est pourvue d'au moins trois canaux d'enfichage électrique femelles (6211) et d'au moins un canal d'enfichage optique femelle (6212), les positions des au moins trois canaux d'enfichage électrique femelles (6211) correspondent à celles des unités de circuit électrique (131) des câbles sous-marins en faisceau (100), et la position du ou des canaux d'enfichage optique femelles (6212) correspond à celle de l'unité optique (132) des câbles sous-marins en faisceau (100), le connecteur électrique femelle (42) et le canal d'enfichage électrique femelle (6211) sont raccordés l'un à l'autre par filetage, et le connecteur optique femelle (52) et le canal d'enfichage optique femelle (6212) sont raccordés l'un à l'autre par filetage,

3. Boîte de jonction de câbles sous-marins en faisceau (100) selon la revendication 2, dans laquelle la plaque de fixation mâle (611) et le premier tube de raccordement (612) délimitent une cavité à extrémité ouverte, et la plaque de fixation femelle (621) et le deuxième tube de raccordement (622) délimitent une cavité à extrémité ouverte, le deuxième tube de raccordement (622) est enfiché dans le premier tube de raccordement (612) et vient en butée contre la plaque de fixation mâle (611), et le premier tube de raccordement (612) vient en butée contre la plaque de fixation femelle (621), et la plaque de fixation mâle (611), le premier tube de raccordement (612), la plaque de fixation femelle (621) et le deuxième tube de raccordement (622) délimitent la deuxième cavité étanche (601).

4. Boîte de jonction de câbles sous-marins en faisceau (100) selon la revendication 3, dans laquelle une paroi extérieure du deuxième tube de raccordement (622) est pourvue d'une rainure d'étanchéité (6221) et d'une bague d'étanchéité, la bague d'étanchéité est installée dans la rainure d'étanchéité (6221), la rainure d'étanchéité (6221) est agencée dans la direction circonférentielle du deuxième tube de raccordement (622), et une pluralité de rainures d'étanchéité (6221) sont agencées à intervalles réguliers dans une direction axiale du deuxième tube de raccordement (622).

5. Boîte de jonction de câbles sous-marins en faisceau (100) selon la revendication 3, dans laquelle une colle de fixation est fournie entre le connecteur électrique mâle (41) et le canal d'enfichage électrique mâle (6111), et la colle de fixation est fournie entre le connecteur optique mâle (51) et le canal d'enfichage optique mâle (6112), la colle de fixation est fournie entre le connecteur électrique femelle (42) et le canal d'enfichage électrique femelle (6211), et la colle de fixation est fournie entre le connecteur optique femelle (52) et le canal d'enfichage optique femelle (6212).

6. Boîte de jonction de câbles sous-marins en faisceau (100) selon l'une quelconque des revendications 2 à 5, dans laquelle le boîtier mâle (61) est pourvu d'un canal d'enfichage électrique mâle à six cœurs, de six canaux d'enfichage électrique mâles à trois cœurs et de trois canaux d'enfichage optiques mâles (6112), le canal d'enfichage électrique mâle à six cœurs est situé au centre de la plaque de fixation mâle (611), les six canaux d'enfichage électrique mâles à trois cœurs sont situés à l'extérieur du canal d'enfichage électrique mâle à six cœurs, les six canaux d'enfichage électrique mâles à trois cœurs sont agencés à intervalles réguliers dans la direction circonférentielle du canal d'enfichage électrique mâle à six cœurs servant de centre, et les trois canaux d'enfichage optique mâles (6112) sont agencés entre le canal d'enfichage électrique mâle à six cœurs et les canaux d'enfichage électrique mâles à trois cœurs, et les trois canaux d'enfichage optique mâles (6112) sont agencés à intervalles réguliers dans la direction circonférentielle du canal d'enfichage électrique mâle à six cœurs servant de centre.

7. Boîte de jonction de câbles sous-marins en faisceau (100) selon l'une quelconque des revendications 1 à 5, dans laquelle le premier élément d'ancrage (10) comprend un premier corps d'ancrage (11) et un premier déflecteur de fixation (12), une extrémité du premier corps d'ancrage (11) est pourvue d'un trou de gaine (111), et l'autre extrémité du premier corps d'ancrage (11) est pourvue d'une cavité, la cavité du premier corps d'ancrage (11) s'étend jusqu'à l'autre extrémité du premier corps d'ancrage (11) et communique avec le trou de gaine (111), le premier déflecteur de fixation (12) est fixé sur l'autre extrémité du premier corps d'ancrage (11) et est pourvu d'un trou de cœur de câble à travers lequel passe le cœur de câble (130) du câble sous-marin en faisceau (100), le deuxième élément d'ancrage (20) comprend un deuxième corps d'ancrage et un deuxième déflecteur de fixation, une extrémité du deuxième corps d'ancrage est pourvue d'un trou de gaine (111), et l'autre extrémité du deuxième corps d'ancrage est pourvue d'une cavité (112), la cavité (112) du deuxième corps d'ancrage s'entend jusqu'à l'autre extrémité du deuxième corps d'ancrage et communique avec le trou de gaine (111), le deuxième déflecteur de fixation est fixé sur l'autre extrémité du deuxième corps d'ancrage et est pourvu d'un trou de cœur de câble à travers lequel passe le cœur de câble (130) du câble sous-marin en faisceau (100),
le couvercle de protection (30) comprend un premier corps de couvercle (31) et un deuxième corps de couvercle (32), le premier corps de couvercle (31) et le deuxième corps de couvercle (32) sont arrimés pour délimiter une cavité cylindrique, et une plaque de fixation est fournie à l'extérieur du premier corps d'ancrage (11), une deuxième plaque de fixation est fournie à l'extérieur du deuxième corps d'ancrage, et la première plaque de fixation (113) et la deuxième plaque de fixation sont chacune fixées aux deux extrémités de la cavité cylindrique.

8. Boîte de jonction de câbles sous-marins en faisceau (100) selon la revendication 7, comprenant en outre un limiteur de flexion (80), le premier élément d'ancrage (10) et le deuxième élément d'ancrage (20) sont chacun raccordés à un limiteur de flexion (80) sur une extrémité éloignée du couvercle de protection (30),
le limiteur de flexion (80) comprend une pluralité de cylindres creux, une extrémité de chaque cylindre creux est pourvue d'une rainure annulaire, l'autre extrémité du cylindre creux est pourvue d'une saillie annulaire, et la rainure annulaire d'un cylindre creux parmi deux cylindres creux adjacents s'emboîte par encliquetage sur la saillie annulaire de l'autre des deux cylindres creux adjacents.
